Europäisches Patentamt

**European Patent Office**

Office européen des brevets

(11) Publication number: **0 121 613**
A1

(12) **EUROPEAN PATENT APPLICATION**

(21) Application number: **83301471.5**

(22) Date of filing: **16.03.83**

(51) Int. Cl.³: **C 02 F 1/40,** C 10 F 5/00

(30) Priority: **08.03.83 CA 423129**

(43) Date of publication of application: **17.10.84**
**Bulletin 84/42**

(84) Designated Contracting States: **AT DE FR GB IT NL SE**

(71) Applicant: **TERRA-NOVA POWER AND DEVELOPMENT LTD., 36 Pippy Place P.O. Box 13531, St. John's Newfoundland A1B 4B8 (CA)**

(72) Inventor: **Moores, William D., 28 Hounsell Avenue Newtown, Mount Pearl Newfoundland A1N 2T8 (CA)**

(74) Representative: **Hartley, David et al, c/o Withers & Rogers 4 Dyer's Buildings Holborn, London, EC1N 2JT (GB)**

(54) **Single cycle continuous process for preparing oil spill absorbing peat.**

㉝ A single cycle continuous process is provided for preparing a novel highly oil absorbent peat product useful to control oil spills for oil spill clean up. The process involves preparing a mixture by mixing peat with an alkaline earth metal basic product, e.g., a magnesium/calcium hydroxide lime substitute material, e.g., at a ratio of peat/basic material of about 100/15. That mixture is heated, either directly in an oven or a microwave oven or indirectly by a heat exchanger in a rotating drum for a predetermined period of time, e.g., at a maximum temperature of about 160 °C, for a maximum time of about 15 minutes, until the peat has the desired moisture content, e.g., about 5–10% by weight water. This novel product can absorb some 20 times its own weight of oil which makes it very advantageous for cleaning up oil spills either on land or on water. Also, the oil contained in the absorbent which has been used to clean the oil spills may be easily removed from the absorbent so that the absorbent can be reused.

- 1 -

## Title of the Invention

### Single Cycle Continuous Process for Preparing Oil Spill Absorbing Peat

The present invention relates to a single cycle continuous process for treating peat to provide oil-absorbing materials which are useful for collecting oils floating on the surface of water or those dispersed in water as oil particles. The present invention also relates to a dried peat product having a moisture content of about 5 - 10% by weight whenever prepared by the process described, the dried peat product being a novel oil-absorbing material.

## Technical Field to Which the Invention Relates

The technical field to which this invention relates is the provision of an oil scavenger material to remove the oil from the sea surface even in the presence of ice. More specifically, it relates to a technique for removing oils, e.g., crude or refined oil, gasoline, or the like, from these water surfaces in order to avoid or reduce pollution of the water. It has particular application in the case of crude oil spills on the high seas and on other bodies of water which are occurring with considerable frequency.

## Relevant Background Art

In recent years, more and more petroleum oil is produced from wells drilled in bodies of water, e.g., the Beaufort Sea, off the east coast of Canada, in the Labrador Sea, off the west coast of the U.S.A.,

in the Gulf of Mexico, off the west coast of Africa, off the west coast of South America, off the coast of Indonesia, off the coast of Vietnam and of China, etc. Each year also finds more and more oil shipped from one location to another by huge ocean-going tankers. Many safeguards and government regulations are provided in an effort to eliminate any loss of oil or spills on such bodies of water. However, despite all the precautions taken, oil is being spilled upon the seas and harbour areas. These oil spills are very undesirable, as it is well known that they can cause damage to the wildlife and pollute beaches to the point where they cannot be used for recreational activities.

Due to the increased importance now being placed on the preservation of the environment, even minor spills or contamination attract widespread attention and the resultant publicity involves damage to corporate public relations which often far outweighs actual damages to property or to the ecology. Moreover, oil-spill cleanup in remote ice infested waters, e.g., the Beaufort Sea and Labrador Sea, is prohibitively expensive and to a large extent, impractical. There are situations, however, in which deliberate neglect is unacceptable. Areas which are breeding or staging areas for migratory seabirds are a prime example. In such areas, oil should be removed from the sea surface regardless of cost. Unfortunately, most of the available countermeasure techniques involve a trade-off between the various types of fauna. Such spills have heretofore proven to be extremely difficult to control and have resulted in widespread damage to property and to the ecology. Gradual hydrocarbon contamination of bodies of water can occur from discharge of oily wastes from industrial operations or from ships.

Considerable effort has been expended to try to find effective ways to combat these oil spills. For example, many mechanical oil skimmers and containment devices have been developed; various chemicals have been tried to coagulate the oil to aid in its recovery; and still other methods have been devised to attempt to sink the oil to the bottom of the body of water by spraying finely-divided clays or silicone-treated sand on the surface of the oil. The removal of oil from water can furthermore be accomplished by pumping if there is a sufficient thickness of oil in a given limited area, as when it is confined by a boom relatively shortly after the occurrence of a spill. Even so, however, a residue of oil always remains on the surface in the form of a thin film which continued pumping cannot remove. Frequently, there are also small spills on water where pumping is not feasible.

It has been proposed to eliminate oil films and layers floating upon bodies of water by virtue of the lower specific gravity of the oil by casting onto the oil-covered surface absorbent materials which draw the oil onto the absorbent and into the pores thereof. For this purpose, expanded perlite, hay, sawdust, natural peat, sand, kieselguhr, diatomaceous earth and the like materials lighter than water have been used. Plastic materials with high capacity have also been suggested for this purpose. Natural rubber latex granulates with good oil absorption characteristics have also been used. Mineral materials preferably made of hydrophobic and hydrophilic materials, for example, most vegetable fibers, e.g., cellulosic fibers, have also been used. Absorbent powdered materials of volcanic origin which have been rendered hydrophilic, to facilitate removal of oil pollutants from bodies of water, have also been used either alone or in combination with other commonly employed materials. Expanded polystyrene beads have also been used to absorb the undesired oil from various surfaces.

Cellular materials have also been used in which the oleophilic character is enhanced, by being exposed to a modifying agent which may be an emulsion, solution, vapor or particular form. Suitable modifying agents have been all kinds of bituminous materials, e.g., asphalt, coal tar pitch, and tall oil pitch, as well as waxes, metallic soaps, silicones, and other similar coatable, water-insoluble, oil-absorbing substances.

Expanded silicone-coated mineral perlite has been used in the past to remove an oily film from a body of water (see United States Patent No. 3,382,170 to Pape).

In United States Patent No. 3,464,920, assigned to Wacker-Chemie, it is proposed that oil spills be removed from a body of water by treating the spill with organic materials, e.g., sawdust, wood chips, coffee grounds and the like, which have been treated with an organic halosilane.

In United States Patent No. 3,536,615, assigned to Col-Mont Corporation, there is disclosed a product for removing oil slicks which is prepared by treating sawdust, wood chips, shavings, bark, cork and the like, with an adhesive to hold particles of carbon and other mater-

0121613

- 4 -

ials capable of absorbing oil.

In United States Patent No. 3,484,371, assigned to Deutsche Goldund Silber-Scheideanstalt, it is proposed that oil pollutants be removed from the surface of a body of water by spreading hydrophobized spray dried hollow water glass particles thereover. The thin-walled hollow spherical particles are rendered hydrophobic by treatment with vapors of organic halo silanes.

United states Patent No. 3,562,153 to Tully et al discloses the use of colloid hydrophobic metals or metalloid oxides for treating absorbing material to render the material hydrophobic.

Canadian Patent No. 956,921 provides a method for using peat based on the discovery that peat with reduced moisture content loses its hydrophilic qualities and becomes, essentially, hydrophobic. The water content of peat is reduced mechanically to about 75% by weight. The peat is screened to separate the peat into peat fiber and peat fines having a maximum length of about 9.5 mm to about 5 mm. The peat fiber and peat fines are then dried separately to a moisture content of less than about 10% by weight.

Other patents of general interest include the following:

Canadian Patent No. 973,810 issued September 2, 1975 to The Grantley Company;

Canadian Patent No. 976,141 issued October 14, 1975 to Cabot Corporation;

Canadian Patent No. 980,259 issued December 23, 1975 to Amoco Canada Petroleum Company Ltd.;

Canadian Patent No. 982,105 issued January 20, 1976 to Grefio Inc.;

Canadian Patent No. 984,305 issued February 24, 1976 to Amoco Canada Petroleum Company Ltd.;

Canadian Patent No. 982,951 issued February 3, 1976 to International Paper Company;

Canadian Patent No. 986,911 issued April 6, 1976 to E.C. Peterson;

Canadian Patent No. 990,650 issued June 8, 1976 to Amoco Canada Petroleum Company Ltd.;

Canadian Patent No. 991,158 issued June 15, 1976 to Atlantic Richfield Company;

Canadian Patent No. 1,010,016 issued May 10, 1977 to Uniroyal Inc.;

Canadian Patent No. 1,034,052 issued July 4, 1978 to Charles J. Hsu;

Canadian Patent No. 1,041,387 issued October 31, 1978 to R.B.H. Cybernetic (1970) Ltd.;

Canadian Patent No. 1,043,759 issued December 5, 1978 to P. Preus;

Canadian Patent No. 1,053,158 issued April 24, 1979 to V.S. Pedene;

Canadian Patent No. 1,060,874 issued August 21, 1979 to Mitsui Toatsu Chemicals Incorporated;

Canadian Patent No. 1,062,689 issued September 18, 1979 to Mitsubishi Rayon Co. Ltd.;

Canadian Patent No. 1,063,583 issued October 2, 1979 to Agency of Industrial Science and Technology;

Canadian Patent No. 1,072,017 issued February 19, 1980 to Imperial-Chemical Industries Limited;

and        Canadian Patent No. 1,089,841 issued November 18, 1980 to Keyes Fibre Company (Delaware).

Assessment of the Background Art

Purely mechanical recovery systems are difficult to establish and maintain owing to the normally large area of leakage and the constant wave action in such area.

With respect to the use of absorbents, the capacity of many such materials to adsorb oil is comparatively weak. Other such materials adsorb water and, having become sufficiently wet, they will sink in water entraining some oil and leaving some oil to float as oil slicks. Many other of these materials are unsuitable for the selective removal of oil films from bodies of water.

Many of the naturally-occurring materials are generally insufficiently preferentially oil-wetted to permit maximum oil absorption before sinking down in the water below the oil pollutants. Highly absorbent latex granulates, on the other hand, tend to drift to the center of the oil spill rendering confinement of the spill difficult and subsequent separation of the oil from the latex virtually impossible. With respect

- 6 -

to the use of a microporous substance in finely-divided form, the capillary attraction of these particles is for water as well as for the oil substances so that a large part of the absorptive capacity of the particles is consumed by saturation of water and is unavailable for pick-up of the oil. Other absorbents have a tendency to re-release sequestered oil. In some materials which absorb water, the absorption of the water would tend to dislocate any air entrapped in the cellulosic fibers, causing the fibers to sink. Powders are unsuitable because of the unfavourable spreading properties of powders due to their tendency to dust, the tendency of the dust to sink under the surface of the water after oil has been absorbed and the tendency of the agglomerated material to leak oil during removal. Foamed polystyrene, on the other hand, has been particularly slow in absorbing oil. Also, these polymeric foam and polymeric hydrocarbon sorbents, when placed into an oil spill on water, penetrate the oil/water interface and begin, at those portions of their surfaces located below the oil level, to absorb water.

The oil-absorbing materials of the synthetic fibers melt during combustion, and it is difficult to burn them off. Furthermore, they produce black smoke or hazardous substances during combustion, and therefore, a special combustion furnace or special equipment for the removal of the hazardous substances is required.

Disclosure of the Invention as Claimed

The invention as claimed is intended to provide a remedy for all the problems described hereinabove. It solves these problems by preparing a peat oil-absorbing material by the steps comprising: preparing a mixture by mixing peat with an alkaline earth metal basic material; and heating the mixture for a predetermined period of time and at a predetermined temperature until the peat has the desired moisture content of about 5 - 10% by weight water.

The advantages offered by the invention are that such peat oil absorbing material is prepared by an economically viable single cycle continuous process and yet has improved rates and quantities of oil absorption when contacted with oil-contaminated water.

This invention is also characterized by an apparatus to carry out the above process and including: (a) a peat feeding bin; (b) a mixing and chemical storage bin; (c) means for conveying peat from the peat bin to the mixing and chemical storage bin; (d) a continuously longitudinally feeding heated dryer having an inlet at one end and an outlet at the longitudinally opposite end; (e) means for feeding the mixture to the inlet of the dryer; (f) a solids/gas separator having a common inlet, an upper gas outlet and a lower solids outlet; (g) means for feeding the effluent of dried peat and steam to the common inlet of the separator; (h) means for venting steam from the gas outlet; and (i) means for recovering solids from the solids outlet.

The novel peat absorbent also constitutes an embodiment of this invention.

In other specific features of the process of this invention, the invention is characterized by:

1) the further steps of: conveying the hot, dried peat to a separating zone; separating the heated dried peat from steam; venting the steam therefrom; and removing the peat from the zone;

2) the further steps of: mixing the peat and the alkaline earth metal basic material in a mixing zone for drying the peat;

3) the alkaline earth basic material is magnesium/calcium hydroxide lime substitute material;

4) the alkaline material contains 10% Mg and 20% Ca to provide a 95% $CaCO_3$ lime equivalent;

5) the peat initially has a humification factor of 2 - 4 on the Van Post scale, and has a moisture content of 60% - 80% by weight, preferably the peat has a humification factor of 3 on the Van Post scale and a moisture content of 70%;

6) the ratio of peat/basic material in the mixture is 100/15; and 7) the temperature of the heating is 160°C., preferably for not longer than 15 minutes.

It is known that peat has outstanding qualities, since in its natural state it has absorbed approximately 90% water. It has now been found, however, that on drying peat to approximately 5-10% moisture content in the manner described above, such peat can absorb other liquid material, e.g., oil.

While it is not desired to be bound by any particular theory, it is known that peat is composed of wood fibers, which are encompassed in a sheath of water, referred to as a colloid, or as the colloidal content of the peat. On contact with some fluids, chemical attractive bonding, or breakage, of bonds within this colloidal content, takes place to permit selective absorption of that fluid. Oil is one such fluid for which this concept of selective absorption occurs.

While it is not desired to be restrictive to any particular theory, it is further believed that the peat, when coming in contact with the oil, will more readily absorb the oil than it will attempt to retain the water of its colloidal sheath. This is believed to be due to the strong chemical attractive forces between the molecules of the peat and those of the oil. These forces, so powerful as to overcome the forces between the peat and water molecules, causes the destruction of those bonds and the formation of new bonds between the oil and the peat. It is for this reason that such dried peat will absorb up to 20 times its own weight in oil, rather than absorbing, or retaining, water. This, and the fact that the herinabove defined dried peat has a stronger affinity to oil than the straw which is now being used (which can absorb only 4 - 5 times its own weight) demonstrates its amazing suitability for oil spill pollution control. The peat is also a benign absorbent and can also be used to absorb oil spills on land. This is because the dried peat of this invention is sterile and organically compatible.

Description of at Least One Way of Carrying Out the Invention

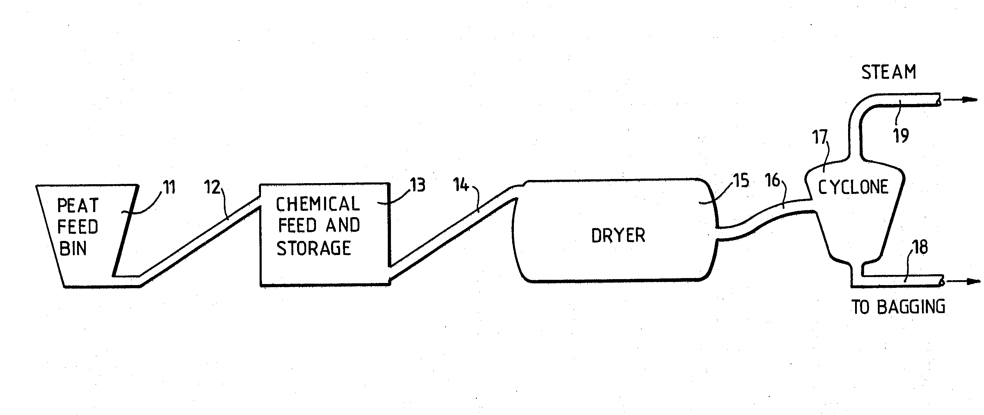

.. One way of carrying out the process of this invention is described in detail below with reference to drawings, which illustrate only one specific embodiment, in which the single figure is a schematic view of the single cycle process and apparatus of an aspect of this invention.

As seen in the drawing, the peat is stored in a peat feed tube 11, and is conveyed via conveyor 12 to an alkaline feed and storage bin and peat/alkaline feed mixing bin 13 where the proper selected proportions of peat and alkaline feed is stored and intermixed. The mixture of peat/alkaline feed is fed by conveyor 14 to a dryer 15 in the form of a horizontally-arranged drum. Preferably, the drum is a rotatable drum provided with external heating means (not shown) and internal mixing blades (not shown), so that a longitudinally self-feeding apparatus is provided for material fed in at one end through inlet 15a and effluent removed from the longitudinally spaced apart other end through effluent outlet 15b. The dried peat and released water in the form of steam is fed by conveyor 16 to the inlet 17a of a cyclone separator 17. In the cyclone separator 17, the steam is removed through outlet 17b and vented via line 19, while the dry peat powder is removed through outlet 17c and is bagged at a bagging zone (not shown).

- 9 -

### Example

The mixture in bin 13 comprised 100 lbs. of peat of a humification factor of 3 on the Van Post scale, and a moisture content of 70% and 15 lbs. of alkaline material, i.e., a commercially available magnesium/calcium hydroxide lime substitute (10% Mg, 20% Ca to give a 95% $CaCO_3$ lime equivalent). This mixture was then continuously fed to the dryer 15 where it was heated to about $160^{\circ}C$.

The continuous process permits the initially fed peat/alkaline material mixture, fed in at inlet 15a through 14, to have a residence time within dryer 15 until it is removed through outlet 15b of a maximum of 15 minutes. The peat was reduced to a dry powder and separated from the steam in cyclone separator 17. The peat when removed had a moisture content of about 5% - 10%.

In commercial tests on oil spills in water, it hwas been found that the peat can absorb some 20 times its own weight of oil. Moreover, the oil which has been absorbed by the peat can be easily removed and recovered, and the peat can be subjected to another treatment cycle for reuse if--desired.

- 1 -

Claims:

1. A single cycle continuous process for treating peat to provide oil absorbing materials which are useful for collecting oil floating on the surface of water or oil dispersed in water as oil particles characterized by the essential steps of: preparing a mixture of peat with an alkaline earth metal basic material; and heating said mixture for a predetermined period of time and at a predetermined temperature until said peat has a final moisture content of about 5 - 10% by weight water.

2. The process of claim 1 characterized by the further steps of: conveying the hot, dried peat to a separating zone; separating the heated dried peat from steam; venting the steam therefrom; and removing the peat from said zone.

3. The process of claims 1 or 2 characterized by the further steps of: mixing said peat and said alkaline earth metal basic material in a mixing zone for drying said peat.

4. The process of claims 1, 2 or 3 characterized in that said alkaline earth basic material is magnesium/calcium hydroxide lime substitute material.

5. The process of claim 4 characterized in that said alkaline material contains 10% Mg and 20% Ca to provide a 95% $CaCO_3$ lime equivalent.

6. The process of claims 4 or 5 characterized in that said peat initially has a humification factor of 2 - 4 on the Van Post scale, and has a moisture content of 60% - 80% by weight, preferably in that said peat has a humification factor of 3 on the Van Post scale and a moisture content of 70%.

7. The process of claims 4, 5 or 6 characterized in that the ratio of peat/basic material in said mixture is 100/15.

8. The process of claims 4, 5, 6 or 7 characterized in that the temperature of said heating is 160°C., preferably for not longer than 15 minutes.

9. A dried peat product having a moisture content of about 5 - 10% by weight water when prepared by the process of any one of claims 1 - 8 inclusive.

10. Apparatus for carrying out the process of claims 1 - 8 characterized by:

(a) a peat feeding bin (11);

(b) a mixing and chemical storage bin (13);

(c) means (14) for conveying peat from said peat feed bin (11) to said mixing and chemical storage bin (13);

(d) a continuously longitudinally feeding heated dryer (15) having an inlet (15a) at one end and an outlet (15b) at the longitudinally opposite end;

(e) means (14) for feeding said mixture to the inlet (15a) of said dryer (15);

(f) a solids/gas separator (17) having a common inlet (17a), an upper gas outlet (17b) and a lower solids outlet (17c);

(g) means (16) for feeding said effluent of dried peat and steam (17a) to the common inlet of said separator (17);

(h) means (19) for venting steam from said gas outlet (17b); and (i) means (18) for recovering solids from said solids outlet (17c).

PEAT
FEED
BIN

CHEMICAL
FEED AND
STORAGE

DRYER

CYCLONE

STEAM

TO BAGGING

11  12  13  14  15  16  17  19  18

1/1

0121613

0121613

European Patent Office

**EUROPEAN SEARCH REPORT**

Application number

EP 83 30 1471

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| E | EP-A-0 075 384 (TERRA-NOVA POWER) <br> * Claims 1-10 * | 1-10 | C 02 F 1/40 <br> C 10 F 5/00 |
| | --- | | |
| A | US-A-2 014 764 (T. GRAM) <br> * Page 1, left-hand column, line 37 - right-hand column, line 3; page 1, right-hand column, line 48 - page 2, left-hand column, line 19 * | 1,10 | |
| | --- | | |
| A | GB-A- 152 515 (N. DE LONG) <br> * Page 2, claim 1, lines 26-35 * | 1,4 | |
| | --- | | |
| A | GB-A- 13 924 (J. ANDERSON) A.D. 1913 <br> * Claims 1-3 * | 1,8,10 | |
| | | | TECHNICAL FIELDS SEARCHED (Int. Cl. 3) |
| A | FR-A- 551 862 (M. HEUET) <br> * Page 1, abstract * | 1 | C 02 F <br> C 10 F |
| | --- | | |
| A | GB-A- 3 367 (S.L. ELBORNE) A.D. 1912 | | |
| | ----- | | |

The present search report has been drawn up for all claims

| Place of search | Date of completion of the search | Examiner |
|---|---|---|
| THE HAGUE | 14-06-1984 | TEPLY J. |